# EUROPEAN PATENT APPLICATION

(11) **EP 4 836 416 A1**
(43) Date of publication of application: **04.11.2026**
(21) Application number: 25741446.6
(22) Date of filing: 13.01.2025
(51) Int. Cl.: H04N 19/85

(54) **IMAGE PROCESSING METHODS AND RELATED DEVICE**

(30) Priority: 19.01.2024 CN 202410084795
(71) Applicant: Huawei Technologies Co., Ltd., Shenzhen, Guangdong 518129 (CN)
(72) Inventor: LAN, Yuan, Shenzhen, Guangdong 518129 (CN); NI, Gang, Shenzhen, Guangdong 518129 (CN); SUN, Zhaoyi, Shenzhen, Guangdong 518129 (CN); ZHOU, Jun, Shenzhen, Guangdong 518129 (CN); SUN, Jie, Shenzhen, Guangdong 518129 (CN)
(74) Representative: Isarpatent
(86) International application number: PCT/CN2025/071985
(87) International publication number: WO 2025/152884

(57) **Abstract**

An image processing method is disclosed. The method includes: obtaining an image and a quality factor, where the quality factor is related to a compression bit rate of the image; obtaining, based on the quality factor, first scaling information by using a first neural network; performing feature extraction on the image by using a feature extraction network, to obtain a target feature map, where the feature extraction network includes a first feature extraction layer, and the first feature extraction layer is used to scale, based on the first scaling information, a feature value obtained by performing feature extraction on a first feature map, to obtain a second feature map; and encoding the target feature map to obtain a bitstream. In this application, distribution of M feature values included in the first feature map changes due to a scaling operation performed in the first feature map, and a compression bit rate of a bitstream obtained by encoding a subsequently obtained feature map adapts to a required compression bit rate, thereby controlling the compression bit rate.

## Description

This application claims priority to Chinese Patent Application No. 202410084795.2, filed with the China National Intellectual Property Administration on January 19, 2024, and entitled "IMAGE PROCESSING METHOD AND RELATED DEVICE", which is incorporated herein by reference in its entirety.

### TECHNICAL FIELD

This application relates to the field of artificial intelligence, and in particular, to an image processing method and a related device.

### BACKGROUND

Nowadays, multimedia data accounts for the majority of internet traffic. Compression of image data plays a vital role in storage and efficient transmission of multimedia data. Therefore, image encoding is a technology of great practical value.

Image encoding has been researched for a long history. Researchers put forward a large quantity of methods and formulate various international standards, such as JPEG, JPEG2000, WebP, and BPG. Although these encoding methods are all widely applied currently, these conventional methods show some limitations for an increasing amount of image data and continuously emerging new media types.

In recent years, researchers have started to research a deep learning-based image encoding method. Some researchers have already achieved promising results. For example, Ballé et al. proposed an end-to-end optimization image encoding method, surpassing current best image encoding performance and even surpassing a current best conventional encoding standard BPG. However, currently, deep convolutional network-based image encoding mostly has a disadvantage, that is, one trained model can output only one encoding result for one type of input image, and cannot achieve an encoding effect of a required compression bit rate according to an actual requirement.

### SUMMARY

According to a first aspect, this application provides an image processing method. The method includes: obtaining an image and a quality factor, where the quality factor is related to a compression bit rate of the image; obtaining, based on the quality factor, first scaling information by using a first neural network; performing feature extraction on the image by using a feature extraction network, to obtain a target feature map, where the feature extraction network includes a first feature extraction layer, and the first feature extraction layer is used to scale, based on the first scaling information, a feature value obtained by performing feature extraction on a first feature map, to obtain a second feature map; and encoding the target feature map to obtain a bitstream. In this embodiment of this application, distribution of M feature values included in the first feature map changes due to a scaling operation performed in the first feature map, and a compression bit rate of a bitstream obtained by encoding a subsequently obtained feature map adapts to a required compression bit rate, thereby controlling the compression bit rate.

In a possible implementation, the first scaling information includes M scaling coefficients, the first feature map includes M feature values, each scaling coefficient corresponds to one feature value, and the first feature extraction layer is used to scale each of the M feature values based on a corresponding scaling coefficient.

In a possible implementation, the method further includes: obtaining, based on the quality factor, second scaling information by using a second neural network, where the first scaling information is different from the second scaling information, and the feature extraction network further includes a second feature extraction layer, and the second feature extraction layer is used to scale, based on the second scaling information, a feature value obtained by performing feature extraction on a third feature map, to obtain a fourth feature map.

In this embodiment of this application, for feature maps obtained at different feature extraction layers (or at least two feature extraction layers) in the feature extraction network, the quality factor may be mapped to different scaling information by using different neural networks. In addition, the obtained scaling information may adaptively have a same size as a corresponding feature map.

In a possible implementation, the scaling is implemented through a product operation.

In a possible implementation, the method further includes: obtaining a compressed file of the image based on the bitstream and the quality factor.

In a possible implementation, the quality factor is selected from a plurality of candidate quality factors based on the compression bit rate.

According to a second aspect, this application provides an image processing method. The method includes: obtaining a compressed file, where the compressed file includes a bitstream and a quality factor; obtaining, based on the quality factor, first scaling information by using a first neural network; decoding the bitstream to obtain a second feature map; and performing image reconstruction on the second feature map by using a feature inverse transform network, to obtain an image, where the feature inverse transform network includes a first feature inverse transform layer, and the first feature inverse transform layer is used to scale, based on the first scaling information, a feature value obtained by performing feature inverse transform on the second feature map, to obtain a first feature map.

In a possible implementation, the first scaling information includes M scaling coefficients, the second feature map includes M feature values, each scaling coefficient corresponds to one feature value, and the first feature inverse transform layer is used to scale each of the M feature values based on a corresponding scaling coefficient.

In a possible implementation, the method further includes: obtaining, based on the quality factor, second scaling information by using a second neural network, where the first scaling information is different from the second scaling information, and the feature inverse transform network further includes a second feature inverse transform layer, and the second feature inverse transform layer is used to scale, based on the second scaling information, a feature value obtained by performing feature inverse transform on a third feature map, to obtain a fourth feature map.

In a possible implementation, the compressed file further includes prior information, and the bitstream includes a plurality of segments of sub-bitstreams; and decoding the bitstream to obtain the second feature map includes: obtaining statistical information of the bitstream based on the prior information, where the statistical information includes a mean; and based on missing of a target segment of bitstream in the plurality of segments of bitstreams, using a mean of the target segment of bitstream as a feature map of the target segment of bitstream in the second feature map.

In the foregoing manner, when a part of bitstream segments in the compressed file are missing, the mean in the statistical information may still be reused as the feature map, thereby ensuring normal decoding.

According to a third aspect, this application provides an image processing apparatus. The apparatus includes:
an obtaining module, configured to obtain an image and a quality factor, where the quality factor is related to a compression bit rate of the image; and
a processing module, configured to: obtain, based on the quality factor, first scaling information by using a first neural network; perform feature extraction on the image by using a feature extraction network, to obtain a target feature map, where the feature extraction network includes a first feature extraction layer, and the first feature extraction layer is used to scale, based on the first scaling information, a feature value obtained by performing feature extraction on a first feature map, to obtain a second feature map; and encode the target feature map to obtain a bitstream.

In a possible implementation, the first scaling information includes M scaling coefficients, the first feature map includes M feature values, each scaling coefficient corresponds to one feature value, and the first feature extraction layer is used to scale each of the M feature values based on a corresponding scaling coefficient.

In a possible implementation, the processing module is further configured to:
obtain, based on the quality factor, second scaling information by using a second neural network, where the first scaling information is different from the second scaling information, and
the feature extraction network further includes a second feature extraction layer, and the second feature extraction layer is used to scale, based on the second scaling information, a feature value obtained by performing feature extraction on a third feature map, to obtain a fourth feature map.

In a possible implementation, the scaling is implemented through a product operation.

In a possible implementation, the processing module is further configured to:
obtain a compressed file of the image based on the bitstream and the quality factor.

In a possible implementation, the quality factor is selected from a plurality of candidate quality factors based on the compression bit rate.

According to a fourth aspect, this application provides an image processing apparatus. The apparatus includes:
an obtaining module, configured to obtain a compressed file, where the compressed file includes a bitstream and a quality factor; and
a processing module, configured to: obtain, based on the quality factor, first scaling information by using a first neural network; decode the bitstream to obtain a second feature map; and perform image reconstruction on the second feature map by using a feature inverse transform network, to obtain an image, where the feature inverse transform network includes a first feature inverse transform layer, and the first feature inverse transform layer is used to scale, based on the first scaling information, a feature value obtained by performing feature inverse transform on the second feature map, to obtain a first feature map.

In a possible implementation, the first scaling information includes M scaling coefficients, the second feature map includes M feature values, each scaling coefficient corresponds to one feature value, and the first feature inverse transform layer is used to scale each of the M feature values based on a corresponding scaling coefficient.

In a possible implementation, the processing module is further configured to:
obtain, based on the quality factor, second scaling information by using a second neural network, where the first scaling information is different from the second scaling information, and
the feature inverse transform network further includes a second feature inverse transform layer, and the second feature inverse transform layer is used to scale, based on the second scaling information, a feature value obtained by performing feature inverse transform on a third feature map, to obtain a fourth feature map.

In a possible implementation, the compressed file further includes prior information, and the processing module is specifically configured to:
obtain statistical information of the bitstream based on the prior information, where the statistical information includes a mean; and
based on missing of a target segment of bitstream in the plurality of segments of bitstreams, use a mean of the target segment of bitstream as a feature map of the target segment of bitstream in the second feature map.

According to a fifth aspect, an embodiment of this application provides a computer-readable storage medium. The computer-readable storage medium stores a computer program. When the computer program runs on a computer, the computer is enabled to perform the image processing method according to any one of the first aspect and the second aspect.

According to a sixth aspect, an embodiment of this application provides a computer program. When the computer program runs on a computer, the computer is enabled to perform the image processing method according to any one of the first aspect and the second aspect.

According to a seventh aspect, this application provides a chip system. The chip system includes a processor, configured to support an execution device or a training device to implement functions in the foregoing aspects, for example, sending or processing data and/or information in the foregoing method. In a possible design, the chip system further includes a memory. The memory is configured to store program instructions and data that are necessary for the execution device or the training device. The chip system may include a chip, or may include a chip and another discrete component.

An eighth aspect of this application provides a data processing apparatus. The apparatus may include at least one processor, a memory, and a communication interface. The processor is coupled to the memory and the communication interface. The memory is configured to store instructions, the processor is configured to execute the instructions, and the communication interface is configured to communicate with another network element under control of the processor. When the instructions are executed by the processor, the processor is enabled to perform the image processing method according to any one of the first aspect and the second aspect.

### BRIEF DESCRIPTION OF DRAWINGS

FIG. 1 is a diagram of a structure of an artificial intelligence main framework;
FIG. 2a illustrates an application scenario according to an embodiment of this application;
FIG. 2b illustrates an application scenario according to an embodiment of this application;
FIG. 3 illustrates an embodiment of an image processing method according to an embodiment of this application;
FIG. 4 illustrates an embodiment of an image processing method according to an embodiment of this application;
FIG. 5 illustrates a process of scaling a feature map according to an embodiment of this application;
FIG. 6 illustrates a beneficial effect according to an embodiment of this application;
FIG. 7 illustrates a beneficial effect according to an embodiment of this application;
FIG. 8 illustrates a progressive image reconstruction result;
FIG. 9 illustrates a flowchart of a decoding process;
FIG. 10 illustrates a flowchart of progressive decoding;
FIG. 11 illustrates an image processing process according to an embodiment of this application;
FIG. 11B illustrates a training process according to an embodiment of this application;
FIG. 11C illustrates an image processing process according to an embodiment of this application;
FIG. 12 is a diagram of a structure of an image processing apparatus according to an embodiment of this application;
FIG. 13 is a diagram of a structure of an image processing apparatus according to an embodiment of this application;
FIG. 14 is a diagram of a structure of an execution device according to an embodiment of this application; and
FIG. 15 is a diagram of a structure of a chip according to an embodiment of this application.

### DESCRIPTION OF EMBODIMENTS

The following describes embodiments of the present invention with reference to the accompanying drawings in embodiments of the present invention. Terms used in the implementations of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

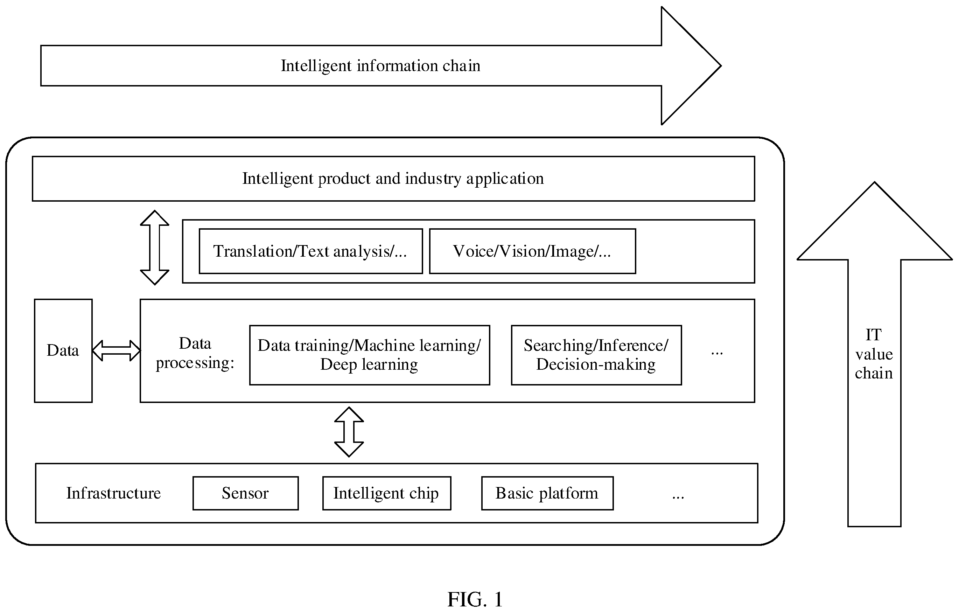

An overall working procedure of an artificial intelligence system is first described. FIG. 1 shows a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip like a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, ranking, and prediction.

### (4) General capability

After the foregoing data processing is performed on data, some general capabilities may be further formed based on a data processing result. For example, the general capability may be an algorithm or a general system, for example, translation, text analysis, computer vision processing, speech recognition, and image recognition.

### (5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent information decision-making mainly include smart terminals, smart transportation, smart health care, autonomous driving, smart cities, and the like.

This application may be applied to the image processing field in the artificial intelligence field, and the following describes a plurality of application scenarios of product landing.

### I. Application to an image compression process in a terminal device

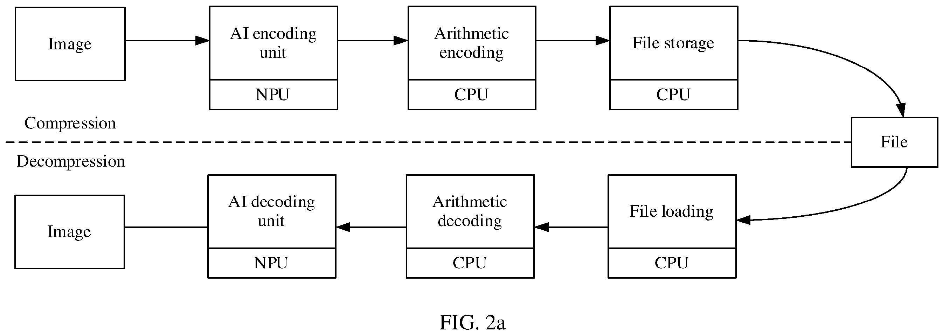

An image compression method provided in embodiments of this application may be applied to an image compression process in a terminal device, and specifically, may be applied to albums, video surveillance, or the like in the terminal device. For details, refer to FIG. 2a. FIG. 2a illustrates an application scenario according to an embodiment of this application. As shown in FIG. 2a, the terminal device may obtain a to-be-compressed picture. The to-be-compressed picture may be a photo taken by a camera or a frame of picture extracted from a video. The terminal device may perform feature extraction on the obtained to-be-compressed picture by using an artificial intelligence (artificial intelligence, AI) encoding unit in an embedded neural-network processing unit (neural-network processing unit, NPU), to convert image data into an output feature of lower redundancy; and generate probability estimates of points in the output feature. A central processing unit (central processing unit, CPU) performs arithmetic encoding on the extracted output feature by using the probability estimates of the points in the output feature, to reduce encoding redundancy of the output feature, to further reduce a data transmission amount in the image compression process; and stores, at a corresponding storage position in a form of a data file, encoded data obtained through encoding. When a user needs to obtain the file stored in the storage position, the CPU may obtain and load the stored file from the corresponding storage position, obtain a decoded feature map based on arithmetic decoding, and perform reconstruction on the feature map by using an AI decoding unit in the NPU, to obtain a reconstructed image.

### 2. Application to an image compression process on a cloud side

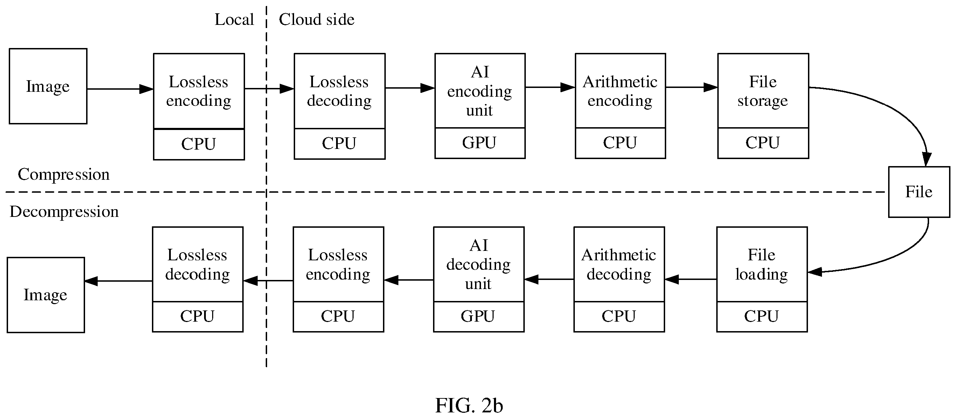

An image compression method provided in embodiments of this application may be applied to an image compression process on a clod side, and specifically, may be applied to a function like cloud albums in a cloud-side server. For details, refer to FIG. 2b. FIG. 2b illustrates an application scenario according to an embodiment of this application. As shown in FIG. 2b, a terminal device may obtain a to-be-compressed picture. The to-be-compressed picture may be a photo taken by a camera or a frame of picture extracted from a video. The terminal device may perform lossless encoding compression on the to-be-compressed picture by using a CPU, to obtain encoded data, where the lossless encoding compression may be performed based on, for example, but is not limited to being performed based on, any lossless compression method in the conventional technology. The terminal device may transmit the encoded data to the cloud-side server. The server may perform corresponding lossless decoding on the received encoded data to obtain a to-be-compressed image. The server may perform feature extraction on the obtained to-be-compressed picture by using an AI encoding unit in a graphics processing unit (graphics processing unit, GPU), to convert image data into an output feature of lower redundancy; and generate probability estimates of points in the output feature. The CPU performs arithmetic encoding on the extracted output feature by using the probability estimates of the points in the output feature, to reduce encoding redundancy of the output feature, to further reduce a data transmission amount in the image compression process; and stores, at a corresponding storage position in a form of a data file, encoded data obtained through encoding. When a user needs to obtain the file stored in the storage position, the CPU may obtain and load the stored file from the corresponding storage position, obtain a decoded feature map based on arithmetic decoding, and perform reconstruction on the feature map by using an AI decoding unit in the NPU, to obtain a reconstructed image. The server may perform lossless encoding compression on the to-be-compressed picture by using the CPU, to obtain encoded data, where the lossless encoding compression may be performed based on, for example, but is not limited to being performed based on, any lossless compression method in the conventional technology. The server may transmit the encoded data to the terminal device, and the terminal device may perform corresponding lossless decoding on the received encoded data, to obtain a decoded image.

In this embodiment of this application, a step of performing gain processing on a feature value in a feature map may be added between the AI encoding unit and a quantization unit, and a step of performing reverse gain processing on a feature value in a feature map may be added between an arithmetic decoding unit and the AI decoding unit. Next, the image processing method in embodiments of this application is described in detail.

Because embodiments of this application relate to massive applications of a neural network, for ease of understanding, the following first describes terms and concepts related to the neural network that may be used in embodiments of this application.

### (1) Neural network

The neural network may include a neuron. The neuron may be an operation unit that uses Xs and an intercept of 1 as inputs, where an output of the operation unit may be as follows: ${h}_{W , b} \left(x\right) = f \left({W}^{T}x\right) = f \left({\sum }_{s = 1}^{n} {W}_{s} {x}_{s} + b\right)$

s=1, 2, ..., n, where n is a natural number greater than 1, Wₛ is a weight of Xₛ, and b is a bias of the neuron. f is an activation function (activation function) of the neuron, and is used for introducing a non-linear feature into the neural network, to convert an input signal in the neuron into an output signal. The output signal of the activation function may be used as an input of a next convolutional layer, and the activation function may be a sigmoid function. The neural network is a network constituted by linking a plurality of single neural units together. To be specific, an output of a neural unit may be an input of another neural unit. An input of each neuron may be connected to a local receptive field of a previous layer to extract a feature of the local receptive field. The local receptive field may be a region including several neurons.

### (2) Deep neural network

The deep neural network (deep neural network, DNN), also referred to as a multi-layer neural network, may be understood as a neural network having a plurality of hidden layers. The DNN is divided based on locations of different layers, so that the neural network in the DNN may be classified into three types: an input layer, a hidden layer, and an output layer. Generally, the first layer is the input layer, the last layer is the output layer, and the middle layer is the hidden layer. Layers are fully connected. To be specific, any neuron at an i^{th} layer is necessarily connected to any neuron at an (i+1)^{th} layer.

Although the DNN seems complex, the DNN is actually not complex in terms of work at each layer, and is simply represented as the following linear relationship expression: ${y}^{⇀} = α \left(W⋅{x}^{⇀}+{b}^{⇀}\right)$ , where ${x}^{⇀}$ is an input vector, ${y}^{⇀}$ is an output vector, ${b}^{⇀}$ is a bias vector, W is a weight matrix (also referred to as a coefficient), and α() is an activation function. At each layer, the output vector ${y}^{⇀}$ is obtained by performing such a simple operation on the input vector ${x}^{⇀}$. Because there are a large quantity of DNN layers, there are also a large quantity of coefficients W and bias vectors ${b}^{⇀}$. Definitions of these parameters in the DNN are as follows: The coefficient W is used as an example. It is assumed that in a DNN having three layers, a linear coefficient from a fourth neuron at a second layer to a second neuron at a third layer is defined as ${W}_{24}^{3}$. The superscript 3 represents a layer at which the coefficient W is located, and the subscript corresponds to an output third-layer index 2 and an input second-layer index 4.

In conclusion, a coefficient from a k^{th} neuron at a (L-1)^{th} layer to a j^{th} neuron at a L^{th} layer is defined as ${W}_{jk}^{L}$.

It is to be noted that there is no parameter W for the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by the vector W at a plurality of layers).

### (3) Convolutional neural network

The convolutional neural network (convolutional neuron network, CNN) is a deep neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

### (4) Loss function

In a process of training a deep neural network, because it is expected that an output of the deep neural network is maximally close to an actually predicted value, a current predicted value of the network may be compared with a target value that is expected, and then a weight vector at each layer of the neural network is updated based on a difference between the current predicted value and the target value (there is usually an initialization process before the first update, in other words, a parameter is preconfigured for each layer of the deep neural network). For example, if the predicted value of the network is large, the weight vector is adjusted to lower the predicted value until the deep neural network can predict the target value that is actually expected or a value close to the target value that is actually expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

### (5) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

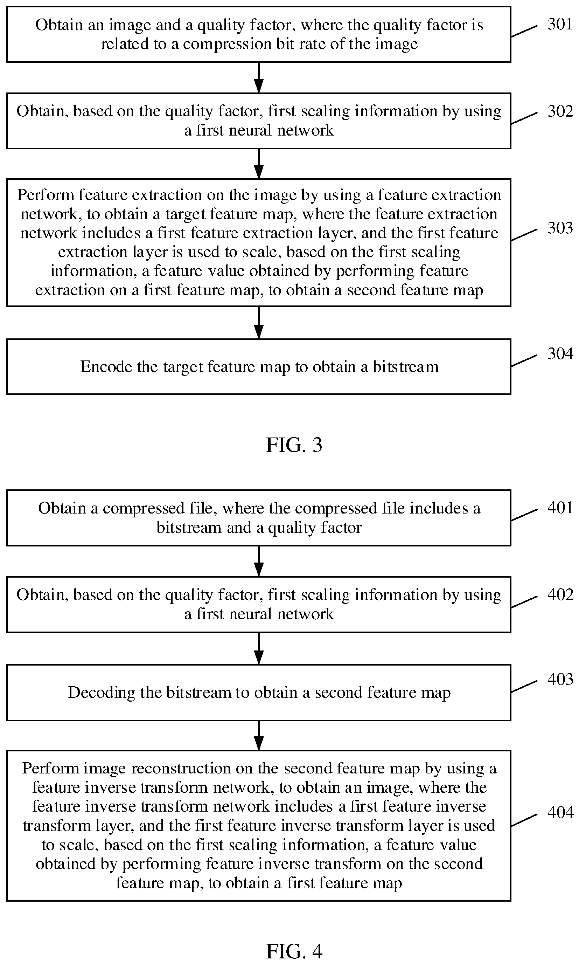

The following describes a data processing method in an embodiment of this application from a perspective of an encoder side. FIG. 3 is a diagram of an embodiment of an image processing method according to an embodiment of this application. As shown in FIG. 3, the image processing method provided in this embodiment of this application includes the following steps.

301: Obtain an image and a quality factor, where the quality factor is related to a compression bit rate of the image.

In this embodiment of this application, the image is a to-be-compressed image. The image may be an image photographed by a terminal device via a camera, or the image may be an image obtained from inside the terminal device (for example, an image stored in an album of the terminal device, or a picture obtained by the terminal device from a cloud). It should be understood that the image may be an image that has an image compression requirement, and a source of a to-be-processed image is not limited in this application.

In this embodiment of this application, the compression bit rate of the image may be obtained. The compression bit rate may be specified by a user, or may be determined by the terminal device based on the image. This is not limited herein.

In a possible implementation, the quality factor may be determined based on the compression bit rate. The quality factor may be mapped to scaling information used to scale a feature map of the image. A value of the quality factor may affect a subsequent compression bit rate. Therefore, it is necessary to determine a quality factor that can make the subsequent compression bit rate be equal to a compression bit rate that meets a requirement.

In a possible implementation, the quality factor may be selected within a specific range, for example, may be selected from a plurality of candidate quality factors. For example, the candidate quality factors may be the following set: {0.5, 0.925, 1.35, ..., 9}.

During selection, the image may be first pre-compressed by using a maximum quality factor and a minimum quality factor to obtain a bit rate, and the bit rate is compared with a required bit rate. Then, a quality factor that can make a bit rate of a pre-compression result be closer to the required bit rate is selected from the maximum quality factor and the minimum quality factor, and the foregoing steps are repeated until an optimal quality factor is selected, or until a preset quantity of iterations is reached through repeating.

In a possible implementation, after the image is obtained, the image may be converted into a bitmap.

302: Obtain, based on the quality factor, first scaling information by using a first neural network.

303: Perform feature extraction on the image by using a feature extraction network, to obtain a target feature map, where the feature extraction network includes a first feature extraction layer, and the first feature extraction layer is used to scale, based on the first scaling information, a feature value obtained by performing feature extraction on a first feature map, to obtain a second feature map.

In a possible implementation, the quality factor may be mapped, by using a neural network (for example, the first neural network in this embodiment of this application), to the scaling information used to scale the feature map of the image.

In this embodiment of this application, optionally, feature extraction may be performed on the image by using the feature extraction network, to obtain the target feature map. In the following, the feature map may also be referred to as a channel feature map image.

For example, the feature extraction network may be a CNN, and the CNN may multiply upper left 3×3 pixels of input data (image) by a weight, and map an output to a neuron at an upper left end of the feature map. The to-be-multiplied weight is also 3×3. Then, in same processing, the CNN scans the input data (image) from left to right and from top to bottom, and multiplies the input data by the weight to map an output to neurons of the feature maps. Herein, the used 3×3 weight is referred to as a filter or a filter kernel. In other words, a process of using a filter in the CNN is a process of performing a convolution operation by using a filter kernel, and an extracted result is referred to as the "feature map". The feature map may also be referred to as a multi-channel feature map image, and the term "multi-channel feature map image" may be a feature map image set corresponding to a plurality of channels. According to an embodiment, the multi-channel feature map image may be generated by the CNN, and the CNN is also referred to as a "feature extraction layer" or "convolution layer" of the CNN. A layer of the CNN may define mapping from an output to an input. Mapping defined by a layer is executed as one or more filter kernels (convolution kernels) to be applied to input data, to generate feature map images to be output to a next layer. The input data may be images or feature mapping images of a specific layer.

During forward execution, the CNN receives an image and uses the image as an output to generate a multi-channel feature map image (namely, the target feature map in this embodiment of this application). In addition, during forward execution, a next layer receives the multi-channel feature map image as an input, and generates a multi-channel feature map image as an output. Then, each subsequent layer receives a multi-channel feature map image generated at a previous layer, and generates a next multi-channel feature map image as an output. Finally, a multi-channel feature map image generated at an (N)^{th} layer is received.

In addition, in addition to an operation of using a convolution kernel in mapping an input feature map image to an output feature map image, another processing operation may be performed. An example of the another processing operation may include but is not limited to application of an activation function, pooling, resampling, or the like.

It should be noted that the foregoing is only one implementation for performing feature extraction on the image. In actual application, a specific feature extraction implementation is not limited.

The feature extraction network may include a plurality of feature extraction layers (for example, feature extraction layers connected in series). The feature extraction layer may obtain a feature map output by an adjacent previous layer, perform a feature extraction operation to obtain the feature map, and input the feature map to a next adjacent feature extraction layer. For example, the plurality of feature extraction layers may include a first feature extraction layer and a second feature extraction layer. The first feature extraction layer is connected to the second feature extraction layer, and a feature map obtained by the first feature extraction layer may be input to the second feature extraction layer.

The feature map may include feature maps of a plurality of channels, and a feature map of each channel may include a plurality of feature values.

In a possible implementation, the first scaling information includes M scaling coefficients, the first feature map obtained by using the first feature extraction network includes M feature values, and each scaling coefficient corresponds to one feature value. In addition to obtaining the feature map, the first feature extraction layer may further scale each of the M feature values based on a corresponding scaling coefficient. For example, the scaling operation may be implemented through a product operation.

Distribution of M feature values included in the first feature map changes due to a scaling operation performed in the first feature map, and a compression bit rate of a bitstream obtained by encoding a subsequently obtained feature map adapts to a required compression bit rate, thereby controlling the compression bit rate.

It should be understood that feature values in a same channel of the first feature map may share a same scaling coefficient.

In this embodiment of this application, for feature maps obtained at different feature extraction layers (or at least two feature extraction layers) in the feature extraction network, the quality factor may be mapped to different scaling information by using different neural networks. In addition, the obtained scaling information may adaptively have a same size as a corresponding feature map.

In a possible implementation, second scaling information may be obtained based on the quality factor by using a second neural network, where the first scaling information is different from the second scaling information, and the feature extraction network further includes a second feature extraction layer, and the second feature extraction layer is used to scale, based on the second scaling information, a feature value obtained by performing feature extraction on a third feature map, to obtain a fourth feature map.

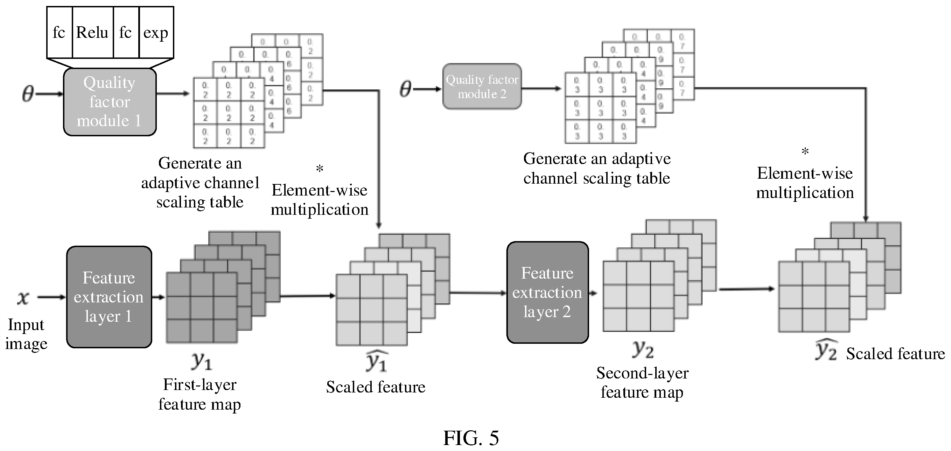

For example, FIG. 5 illustrates a process of scaling a feature map according to an embodiment of this application. A feature extraction layer 1 may be a feature extraction layer closest to an input image. The feature extraction layer 1 may perform feature extraction on the image to obtain a first-layer feature map y1. An adaptive channel scaling table (a size of the scaling table is consistent with that of the first-layer feature map y1) may be obtained based on a quality factor, and a scaled feature is obtained through element-wise multiplication. The scaled feature may be input to a feature extraction layer 2, to obtain a second-layer feature map y2. An adaptive channel scaling table (a size of the scaling table is consistent with that of the second-layer feature map y2) may be obtained based on the quality factor, and a scaled feature is obtained through element-wise multiplication.

The scaling information obtained based on the quality factor and the scaling process performed based on the scaling information may be applied to one or more of a plurality of feature extraction layers. This is not limited in embodiments of this application.

304: Encode the target feature map to obtain a bitstream.

For example, quantization and entropy encoding may be performed on the target feature map, to obtain the bitstream.

In a possible implementation, a compressed file of the image may be obtained based on the bitstream and the quality factor.

For example, channel splitting may be performed on the target feature map. For example, the target feature map is a feature map whose size is C*H*W, where C, H, and W are respectively a quantity of channels, a height, and a width. The quantity of channels is split to split the feature map into four non-uniform feature submaps y₁, y₂, y₃, and y₄ whose sizes are respectively C₁*H*W, C₂*H*W, C₃*H*W, and C₄*H*W, and C₁+C₂+C₃+C₄=C. For example, C=64, C₁=8, C₂=8, C₃=16, and C₄=32.

For example, when the target feature map is encoded, the following steps may be performed.

1. Context modeling: The four feature submaps are transferred to a context prediction module to separately obtain statistical information required for encoding the four feature submaps.

2. Feature quantization: The four feature submaps are quantized into integers.

3. Entropy encoding and data packaging: Entropy encoding is performed based on the four feature submaps and the statistical information corresponding to the four feature submaps in a sequence of y₁, y₂, y₃, and y₄, to obtain four compression bitstreams s₁, s₂, s₃, and s₄, where s₁, s₂, s₃, and s₄ are sequentially spliced into a segment of bitstream. Then, length information of the four bitstreams and the quality factor entered by the user in step 2 are written into a header, and header information is saved. Finally, the bitstream and the header information are packaged into the compressed file.

In a scenario with an extremely low bit rate, reconstructed image quality of a traditional codec is poor. In a deep learning-based method, repeatedly training a plurality of independent models to control a bit rate is inefficient in terms of time and resource occupation. In this embodiment, a deep learning architecture is used to ensure good image reconstruction quality at different bit rates, thereby resolving the first problem. For the second problem, in this example, a quality factor adjustment module is introduced in a feature extraction process to perform layer-by-layer scaling on a feature map, to control an information amount of the feature map, thereby controlling a single-model bit rate and resolving the second problem.

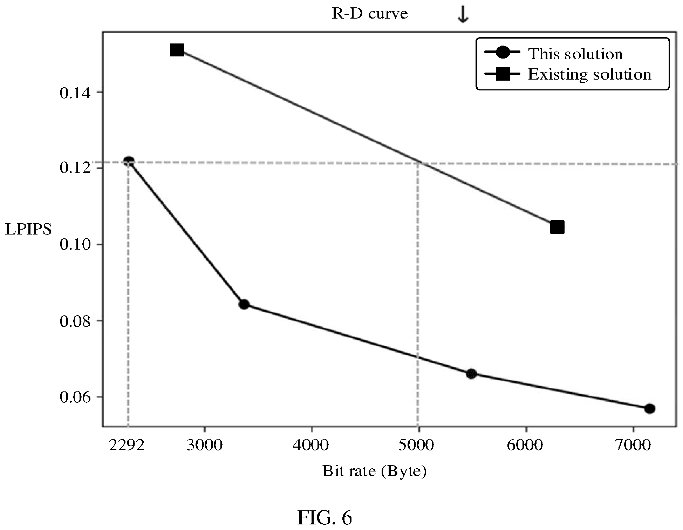

In addition, in this embodiment of this application, the user may be allowed to adjust the required bit rate according to a requirement. For a transmission requirement that a single image is compressed to be less than 800 bytes, in this embodiment of this application, 2.72 times of adjustment and control can be implemented on average to reach a specific bit rate, and encoding time on a CPU is less than 500 ms. In this embodiment of this application, a ROM required for user terminal deployment is low, and the ROM is less than 40 MB. In a case of a low bit rate, a picture reconstruction effect is better than that of a similar deep learning algorithm. As shown in FIG. 6, based on 24 test pictures in a test data set Kodak, an LPIPS is used as a reconstructed image quality indicator (a lower LPIPS indicates better reconstruction quality). Under a same bit rate, the LPIPS in this solution is better than that in an existing solution.

The following describes a data processing method in an embodiment of this application from a perspective of a decoder side. FIG. 4 is a diagram of an embodiment of an image processing method according to an embodiment of this application. As shown in FIG. 4, the image processing method provided in this embodiment of this application includes the following steps.

401: Obtain a compressed file, where the compressed file includes a bitstream and a quality factor.

When the compressed file is obtained, the compressed file may be read. The file may include two parts: one part is a data-compression bitstream, and the other part is header information, including prior information, a quality factor, other information (for example, length information of a bitstream of each segment), and the like. This is not limited in embodiments of this application.

402: Obtain, based on the quality factor, first scaling information by using a first neural network.

403: Decode the bitstream to obtain a second feature map.

In a possible implementation, the first scaling information includes M scaling coefficients, the second feature map includes M feature values, each scaling coefficient corresponds to one feature value, and the first feature inverse transform layer is used to scale each of the M feature values based on a corresponding scaling coefficient.

In a possible implementation, the compressed file further includes prior information, and the bitstream includes a plurality of segments of sub-bitstreams; and decoding the bitstream to obtain the second feature map may include: obtaining statistical information of the bitstream based on the prior information, where the statistical information includes a mean; and based on missing of a target segment of bitstream in the plurality of segments of bitstreams, using a mean of the target segment of bitstream as a feature map of the target segment of bitstream in the second feature map.

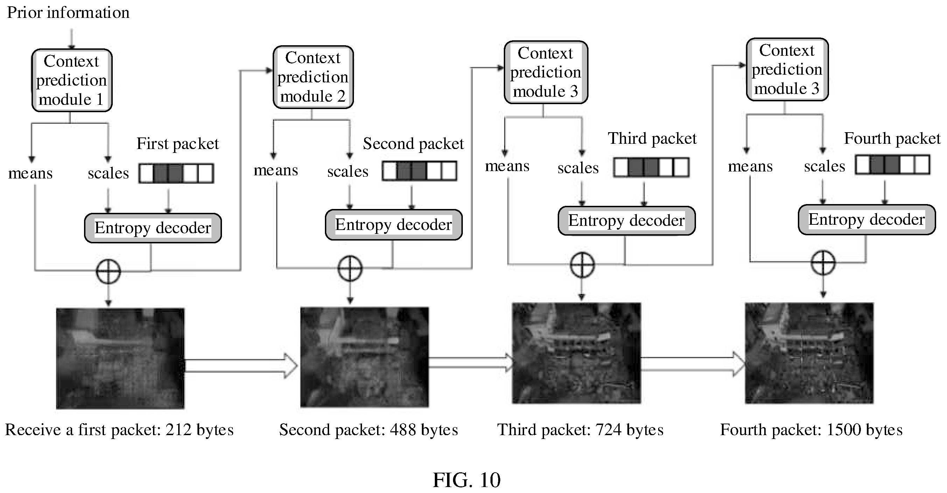

When the bitstream is segmented, in a decompression phase, progressive decoding may be performed in this embodiment of this application, to optimize bandwidth utilization and user experience. Specifically, encoded image data may allow a user to reconstruct an image at a receive end in a phase-division manner, to implement progressive display from low quality to high quality. FIG. 10 illustrates a flowchart of progressive decoding.

Specifically, the received bitstream may be split based on a length, of each segment of bitstream, parsed from the header information, and progressive decoding is performed. The following describes steps of progressively decoding each segment of bitstream.

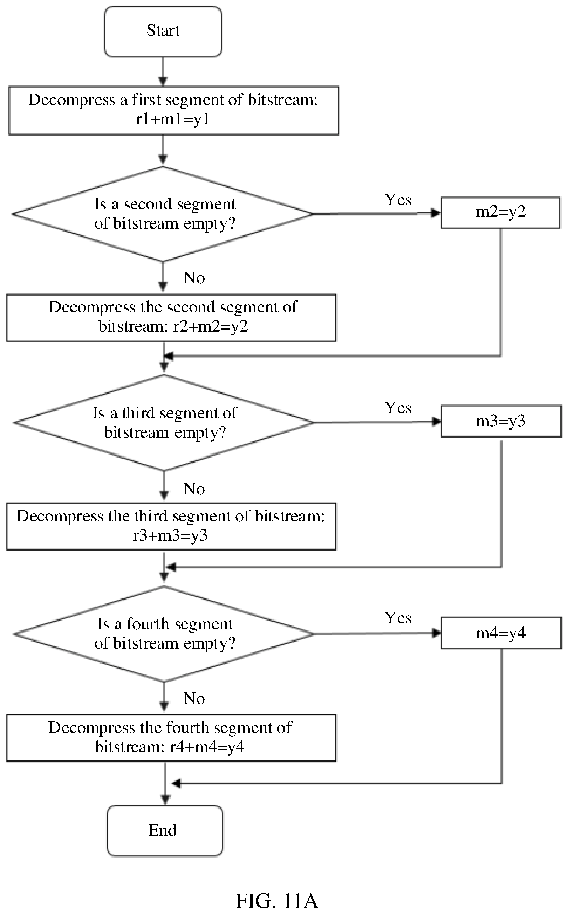

As shown in FIG. 11A, model prior information is input to a context prediction module 1, to obtain statistical information of a first feature submap y₁ through prediction: a mean m₁ and a scale parameter scale₁. A residual r₁ is obtained through decoding (for example, through entropy decoding) from a bitstream s₁ based on statistical information scale₁, and y₁ is obtained based on r₁+m₁=y₁. Then, y₁ is transferred to a context prediction module 2 to obtain m₂ and scale₂. If a second segment of bitstream s₂ is received, a residual r₂ is obtained through decoding from the bitstream s₂ based on scale₂, and y₂ is obtained based on r₂+m₂=y₂. If the second segment of bitstream is not received, r₂ cannot be obtained through decompression, and m₂=y₂.

In the foregoing manner, when a part of bitstream segments in the compressed file are missing, the mean in the statistical information may still be reused as the feature map, thereby ensuring normal decoding.

404: Perform image reconstruction on the second feature map by using a feature inverse transform network, to obtain an image, where the feature inverse transform network includes a first feature inverse transform layer, and the first feature inverse transform layer is used to scale, based on the first scaling information, a feature value obtained by performing feature inverse transform on the second feature map, to obtain a first feature map.

In a possible implementation, second scaling information may be further obtained based on the quality factor by using a second neural network, where the first scaling information is different from the second scaling information, and the feature inverse transform network further includes a second feature inverse transform layer, and the second feature inverse transform layer is used to scale, based on the second scaling information, a feature value obtained by performing feature inverse transform on a third feature map, to obtain a fourth feature map.

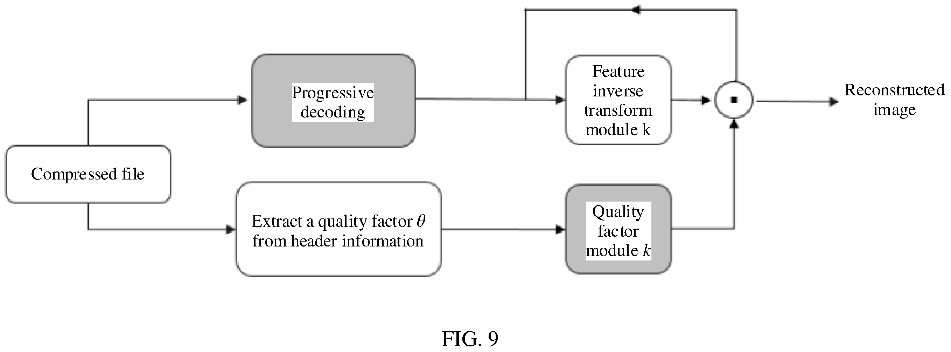

A decoded feature map may be inversely transformed layer by layer to obtain a reconstructed image. The quality factor parsed from the header is transferred to a quality factor module to generate a scaling table with a same size as the feature map. Then, the scaling table is multiplied by the feature map element by element, to obtain a scaled feature map. The scaled feature map continues to be transferred to a feature inverse transform module at a next layer, and works with a scaling table output by a quality factor module at the next layer, to obtain a scaled feature map at the next layer. FIG. 9 illustrates a flowchart of a decoding process.

Compared with a conventional image codec, this solution uses a deep learning architecture to adaptively learn a complex feature and a structure of an image, to maintain high image quality at a low bit rate. Compared with training a plurality of models using a similar deep learning algorithm to adjust and control the bit rate, this solution designs an embedded quality factor module in a single model to flexibly adjust and control, by the single model, the bit rate, thereby reducing a ROM occupied by the model and improving encoding efficiency. Compared with the similar deep learning algorithm, this solution uses feature map channel splitting to design a progressive decoding process, thereby supporting progressive image reconstruction.

A plurality of bit rates can be accurately controlled in the single model by using a quality factor adjustment module and a multi-bit rate adjustment loss function, which significantly improves encoding efficiency. A user is allowed to adjust a required bit rate as required. 2.72 times of adjustment and control can be implemented on average to reach a specific bit rate, and encoding time on a CPU is less than 500 ms. Table 1 illustrates a statistical result of a quantity of compressions.

**Table 1**

| Bit rate distribution | | | | Compression quantity distribution | | |
|---|---|---|---|---|---|---|
| Bit rate | Quantity | Percentage | | Compression quantity | Quantity | Percentage |
| [769.789] | 565 | 37.69% | | 1 | 54 | 3.60% |
| [749,768] | 553 | 36.89% | | 2 | 309 | 20.61% |
| [729,748] | 88 | 5.87% | | 3 | 1136 | 75.78% |
| [709,728] | 23 | 1.53% | | >3 | 0 | 0.00% |
| <709 | 270 | 18.01% | | | | |
| | | | | | | |
| Average bit rate | 722.97 | | | Average quantity | 2.722 | |

In this embodiment of this application, less ROM is occupied for deployment. Because only the single model needs to be used in this solution, ROM occupation can be less than 40 MB. In addition, reconstruction quality is good at a low bit rate. Especially, in a scenario with an extremely low bit rate, image quality can be better than that of a conventional encoder.

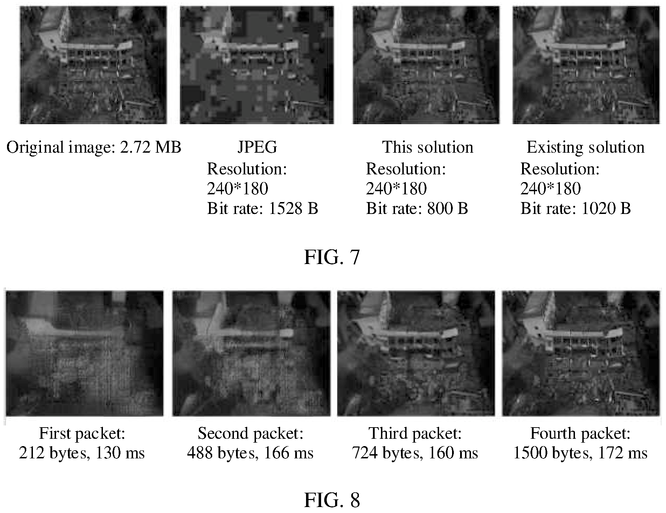

FIG. 7 shows comparison of a visualization result of an embodiment of this application, a visualization result of JPEG, and a visualization result of an existing solution.

In addition, in this embodiment of this application, a multi-channel splitting technology is used to support progressive image reconstruction, so that images can be gradually presented in ascending order of quality. This feature is especially beneficial in an application scenario in which network bandwidth is limited or the images are gradually loaded, thereby improving user experience.

FIG. 8 illustrates a progressive image reconstruction result.

The following describes a diagram of a training process in this embodiment of this application. A training dataset may be obtained during training. For example, the dataset includes N pictures. Quality factor set setting: According to experimental experience, for example, it may be set that a quality factor set ϑ={0.5, 0.925, 1.35, ..., 9}. ϑ includes 20 floating-point numbers that are at a middle distance of 0.425 from 0.5 to 9. Quality factor allocation: One quality factor *θ*_*i* is randomly allocated to each data *x*_*i* in the training data set, where *i*=1, 2, ..., N, and *θ*_*i* is obtained by randomly sampling the quality factor set ϑ={0.5, 0.925, 1.35, ..., 9}. Reconstructed picture obtained through network inference: A picture is transferred to a compression and decompression module to obtain the reconstructed picture and a bitstream length estimation result of a compressed file. Multi-bit-rate adjustment loss function calculation: The obtained reconstructed picture, an original picture in the dataset, and the bitstream length estimation of the compressed file are transferred to a multi-bit-rate adjustment loss function for calculation. For example, the loss function may be shown as follows: $Loss = R + λD = E \left[-{log}_{2}p\left(\hat{z}\right)\right] + λ E {\left‖x-\hat{x}\right‖}_{2}^{2} ;$ $λ = \frac{{θ}_{i}}{{θ}_{mean}} ;$ and ${θ}_{mean} = \frac{0.5 + 9}{2} .$

The model backpropagates, based on the loss function, a gradient to update a weight.

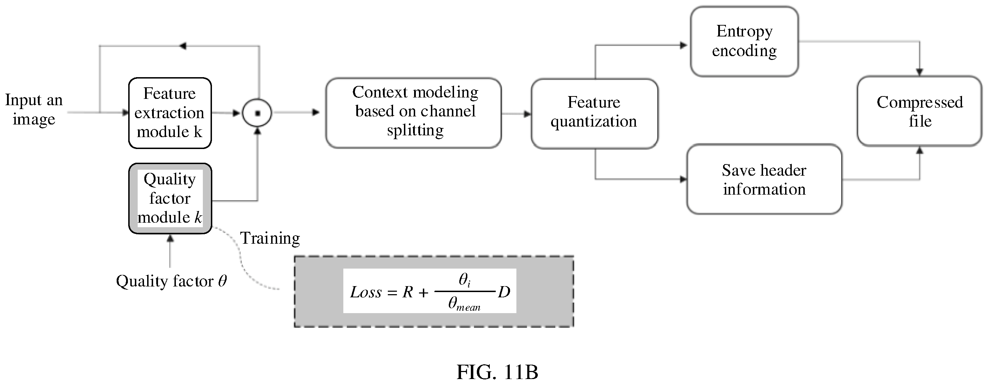

For example, refer to FIG. 11B. FIG. 11B illustrates a flowchart of a training process.

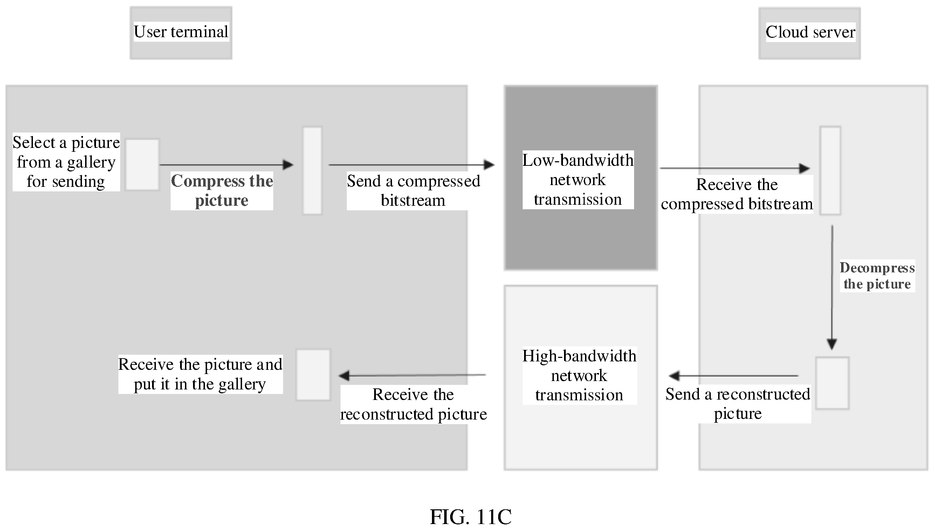

Embodiments of this application may be applied to a low-bandwidth communication scenario. FIG. 11C is a flowchart of the low-bandwidth communication scenario. An entire process in this scenario includes the following steps.

Data reading and compression: This step occurs on a sending user terminal. A user selects a picture from a gallery, and a terminal device reads a picture format into a bitmap. The bitmap is sent to an image codec, and is compressed to a specific bit rate. The present invention plays a role in this phase. A deep learning-based single-model bit rate precision control technology is used to compress the bitmap to a predetermined low bit rate.

Data sending: A compression bitstream is sent by a communication device of the user terminal.

Data transmission: The compression bitstream is transmitted to a cloud server of a service provider over a low bandwidth network. This may be performed via wired or wireless, such as via telephone lines, satellite connections, or cellular networks.

Data receiving: The cloud server receives the compression bitstream.

Data decompression: On the cloud server, the received data is decompressed into a bitmap and converted into an available image format. The present invention supports progressive decoding in this phase, and reconstructs pictures from low quality to high quality based on integrity of the received data (one to four packets).

Data sending: The reconstructed picture is sent via a communication device of the cloud server.

Data transmission: The reconstructed picture is transmitted to a receiving user terminal over a high-bandwidth network.

Data receiving and use: The receiving user terminal receives the reconstructed picture. The picture can be used for a reservation purpose.

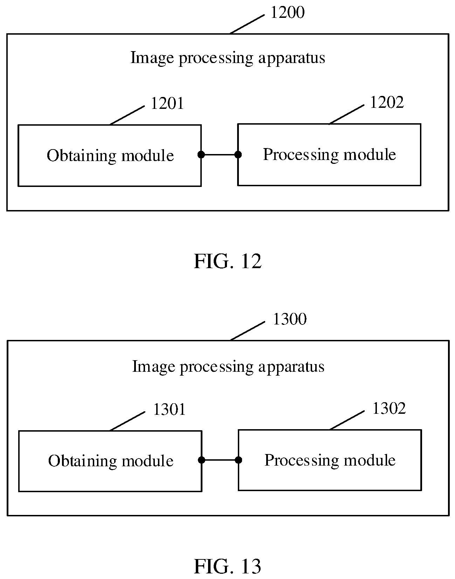

According to embodiments corresponding to FIG. 1 to FIG. 11C, to better implement the foregoing solutions in embodiments of this application, the following further provides related devices configured to implement the foregoing solutions. For details, refer to FIG. 12. FIG. 12 is a diagram of a structure of an image processing apparatus 1200 according to an embodiment of this application. The image processing apparatus 1200 may be a terminal device or a server, and the image processing apparatus 1200 includes:
an obtaining module 1201, configured to obtain an image and a quality factor, where the quality factor is related to a compression bit rate of the image, where
for specific descriptions of the obtaining module 1201, refer to the descriptions of step 301 in the foregoing embodiment, and similarities are not described herein again; and
a processing module 1202, configured to: obtain, based on the quality factor, first scaling information by using a first neural network; perform feature extraction on the image by using a feature extraction network, to obtain a target feature map, where the feature extraction network includes a first feature extraction layer, and the first feature extraction layer is used to scale, based on the first scaling information, a feature value obtained by performing feature extraction on a first feature map, to obtain a second feature map; and encode the target feature map to obtain a bitstream, where
for specific descriptions of the processing module 1202, refer to the descriptions of steps 302 and 303 in the foregoing embodiment, and similarities are not described herein again.

In a possible implementation, the first scaling information includes M scaling coefficients, the first feature map includes M feature values, each scaling coefficient corresponds to one feature value, and the first feature extraction layer is used to scale each of the M feature values based on a corresponding scaling coefficient.

In a possible implementation, the processing module 1202 is further configured to:
obtain, based on the quality factor, second scaling information by using a second neural network, where the first scaling information is different from the second scaling information, and
the feature extraction network further includes a second feature extraction layer, and the second feature extraction layer is used to scale, based on the second scaling information, a feature value obtained by performing feature extraction on a third feature map, to obtain a fourth feature map.

In a possible implementation, the scaling is implemented through a product operation.

In a possible implementation, the processing module 1202 is further configured to:
obtain a compressed file of the image based on the bitstream and the quality factor.

In a possible implementation, the quality factor is selected from a plurality of candidate quality factors based on the compression bit rate.

FIG. 13 is a diagram of a structure of an image processing apparatus 1300 according to an embodiment of this application. The image processing apparatus 1300 may be a terminal device or a server, and the image processing apparatus 1300 includes:
an obtaining module 1301, configured to obtain a compressed file, where the compressed file includes a bitstream and a quality factor, where
for specific descriptions of the obtaining module 1301, refer to the descriptions of step 401 in the foregoing embodiment, and similarities are not described herein again; and
a processing module 1302, configured to: obtain, based on the quality factor, first scaling information by using a first neural network; decode the bitstream to obtain a second feature map; and perform image reconstruction on the second feature map by using a feature inverse transform network, to obtain an image, where the feature inverse transform network includes a first feature inverse transform layer, and the first feature inverse transform layer is used to scale, based on the first scaling information, a feature value obtained by performing feature inverse transform on the second feature map, to obtain a first feature map, where
for specific descriptions of the obtaining module 1301, refer to the descriptions of steps 402 and 403 in the foregoing embodiment, and similarities are not described herein again.

In a possible implementation, the first scaling information includes M scaling coefficients, the second feature map includes M feature values, each scaling coefficient corresponds to one feature value, and the first feature inverse transform layer is used to scale each of the M feature values based on a corresponding scaling coefficient.

In a possible implementation, the processing module 1302 is further configured to:
obtain, based on the quality factor, second scaling information by using a second neural network, where the first scaling information is different from the second scaling information, and
the feature inverse transform network further includes a second feature inverse transform layer, and the second feature inverse transform layer is used to scale, based on the second scaling information, a feature value obtained by performing feature inverse transform on a third feature map, to obtain a fourth feature map.

In a possible implementation, the compressed file further includes prior information, and the processing module 1302 is specifically configured to:
obtain statistical information of the bitstream based on the prior information, where the statistical information includes a mean; and
based on missing of a target segment of bitstream in the plurality of segments of bitstreams, use a mean of the target segment of bitstream as a feature map of the target segment of bitstream in the second feature map.

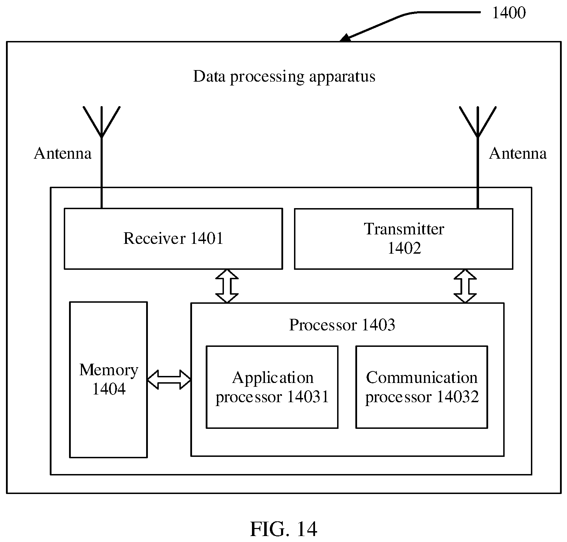

The following describes a data processing apparatus according to an embodiment of this application. FIG. 14 is a diagram of a structure of a data processing apparatus according to an embodiment of this application. Specifically, a data processing apparatus 1400 includes a receiver 1401, a transmitter 1402, a processor 1403, and a memory 1404 (there may be one or more processors 1403 in the data processing apparatus 1400, and an example in which there is one processor is used in FIG. 14). The processor 1403 may include an application processor 14031 and a communication processor 14032. In some embodiments of this application, the receiver 1401, the transmitter 1402, the processor 1403, and the memory 1404 may be connected to each other through a bus or in another manner.

The memory 1404 may include a read-only memory and a random access memory, and provide instructions and data for the processor 1403. A part of the memory 1404 may further include a non-volatile random access memory (non-volatile random access memory, NVRAM). The memory 1404 stores processor and operation instructions, an executable module or a data structure, or a subset thereof, or an extended set thereof. The operation instructions may include various operation instructions for implementing various operations.

The processor 1403 controls an operation of a radar system (including an antenna, the receiver 1401, and the transmitter 1402). During specific application, components of the radar system are coupled together through a bus system. In addition to a data bus, the bus system may include a power bus, a control bus, a status signal bus, and the like. However, for clear description, various types of buses in the figure are marked as the bus system.

The image processing methods (shown in FIG. 3 and FIG. 4) disclosed in the foregoing embodiments of this application may be applied to the processor 1403, or may be implemented by the processor 1403. The processor 1403 may be an integrated circuit chip and has a signal processing capability. In an implementation process, steps in the foregoing methods can be implemented by using a hardware integrated logic circuit in the processor 1403, or by using instructions in a form of software. The processor 1403 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1404, and the processor 1403 reads information in the memory 1404, and completes the steps in the image processing method provided in the foregoing embodiments in combination with hardware of the processor 1403.

The receiver 1401 may be configured to receive input digital or character information, and generate a signal input related to setting and function control of the radar system. The transmitter 1402 may be configured to output the digital or character information through a first interface. The transmitter 1402 may be further configured to send instructions to a disk group through the first interface, to modify data in the disk group.

An embodiment of this application further provides a computer program product. When the computer program product is run on a computer, the computer is enabled to perform the image processing method described in the foregoing embodiments.

An embodiment of this application further provides a computer-readable storage medium. The computer-readable storage medium stores a program used to perform signal processing. When the program is run on a computer, the computer is enabled to perform the image processing method described in the foregoing embodiments.

The data processing apparatus provided in embodiments of this application may be specifically a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, so that a chip in an execution device performs the image enhancement method described in the foregoing embodiments, or a chip in a training device performs the image enhancement method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

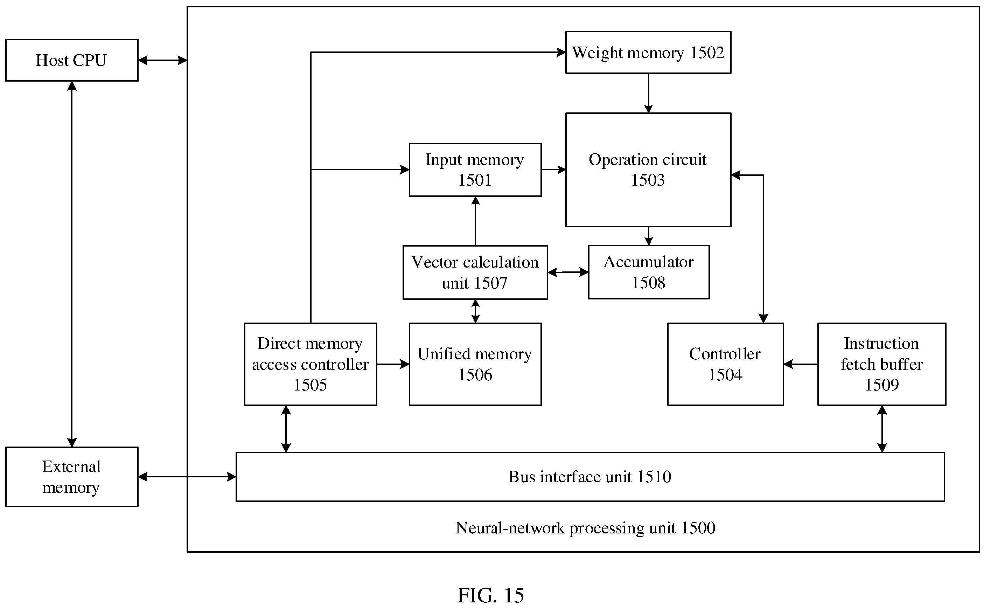

Specifically, FIG. 15 is a diagram of a structure of a chip according to an embodiment of this application. The chip may be represented as a neural network processing unit NPU 1500. The NPU 1500 is mounted to a host CPU (Host CPU) as a coprocessor, and the host CPU allocates a task. A core part of the NPU is an operation circuit 1503, and a controller 1504 controls the operation circuit 1503 to extract matrix data in a memory and perform a multiplication operation.

In some implementations, the operation circuit 1503 internally includes a plurality of processing units (Process Engine, PE). In some implementations, the operation circuit 1503 is a two-dimensional systolic array. The operation circuit 1503 may alternatively be a one-dimensional systolic array or another electronic circuit capable of performing mathematical operations such as multiplication and addition. In some implementations, the operation circuit 1503 is a general-purpose matrix processor.

For example, it is assumed that there is an input matrix A, a weight matrix B, and an output matrix C. The operation circuit fetches corresponding data of the matrix B from a weight memory 1502, and buffers the data on each PE in the operation circuit. The operation circuit obtains data of the matrix A from the input memory 1501 to perform a matrix operation on the matrix B, and stores an obtained partial result or an obtained final result of the matrix into an accumulator (accumulator) 1508.

A unified memory 1506 is configured to store input data and output data. Weight data is directly transferred to the weight memory 1502 by using a direct memory access controller (Direct Memory Access Controller, DMAC) DMAC 1505. The input data is also transferred to the unified memory 1506 by using the DMAC.

A BIU, bus interface unit, that is, a bus interface unit 1510, is configured for interaction between an AXI bus and the DMAC and interaction between the AXI bus and an instruction fetch buffer (Instruction Fetch Buffer, IFB) 1509.

The bus interface unit 1510 (Bus Interface Unit, BIU for short) is configured to obtain an instruction from an external memory by the instruction fetch buffer 1509, and is further configured to obtain original data of the input matrix A or the weight matrix B from the external memory by the direct memory access controller 1505.

The DMAC is mainly configured to transfer input data in the external memory DDR to the unified memory 1506, transfer weight data to the weight memory 1502, or transfer input data to the input memory 1501.

A vector calculation unit 1507 includes a plurality of operation processing units. When necessary, further processing is performed on an output of the operation circuit, such as vector multiplication, vector addition, an exponential operation, a logarithmic operation, and size comparison. The vector calculation unit 1507 is mainly used for non-convolutional/fully connected layer network calculation in a neural network, such as Batch Normalization (batch normalization), pixel-level summation, and upsampling of a feature map.

In some implementations, the vector calculation unit 1507 can store a processed output vector in the unified memory 1506. For example, the vector calculation unit 1507 may apply a linear function and/or a non-linear function to the output of the operation circuit 1503, for example, perform linear interpolation on a feature plane extracted at a convolutional layer, and for another example, accumulate vectors of values to generate an activation value. In some implementations, the vector calculation unit 1507 generates a normalized value, a pixel-level summation value, or both a normalized value and a pixel-level summation value. In some implementations, the processed output vector can be used as an activation input to the operation circuit 1503, for example, used at a subsequent layer in the neural network.

The instruction fetch buffer (instruction fetch buffer) 1509 connected to the controller 1504, configured to store instructions used by the controller 1504.

The unified memory 1506, the input memory 1501, the weight memory 1502, and the instruction fetch buffer 1509 are all on-chip memories. The external memory is private for a hardware architecture of the NPU.

The processor mentioned anywhere above may be a general-purpose central processing unit, a microprocessor, an ASIC, or one or more integrated circuits for controlling program execution of steps related to the data processing method described in the foregoing embodiments.

In addition, it should be noted that the apparatus embodiments described above are merely examples. The units described as separate parts may or may not be physically separate, and parts displayed as units may or may not be physical units, that is, may be located at one position, or may be distributed on a plurality of network units. A part of or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or a part of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, DVD), a semiconductor medium (for example, a solid-state drive (Solid-State Drive, SSD)), or the like.

## Claims

1. An image processing method, wherein the method comprises:
obtaining an image and a quality factor, wherein the quality factor is related to a compression bit rate of the image;
obtaining, based on the quality factor, first scaling information by using a first neural network;
performing feature extraction on the image by using a feature extraction network, to obtain a target feature map, wherein the feature extraction network comprises a first feature extraction layer, and the first feature extraction layer is used to scale, based on the first scaling information, a feature value obtained by performing feature extraction on a first feature map, to obtain a second feature map; and
encoding the target feature map to obtain a bitstream.

2. The method according to claim 1, wherein the first scaling information comprises M scaling coefficients, the first feature map comprises M feature values, each scaling coefficient corresponds to one feature value, and the first feature extraction layer is used to scale each of the M feature values based on a corresponding scaling coefficient.

3. The method according to claim 1 or 2, wherein the method further comprises:
obtaining, based on the quality factor, second scaling information by using a second neural network, wherein the first scaling information is different from the second scaling information, and
the feature extraction network further comprises a second feature extraction layer, and the second feature extraction layer is used to scale, based on the second scaling information, a feature value obtained by performing feature extraction on a third feature map, to obtain a fourth feature map.

4. The method according to any one of claims 1 to 3, wherein the scaling is implemented through a product operation.

5. The method according to any one of claims 1 to 4, wherein the method further comprises:
obtaining a compressed file of the image based on the bitstream and the quality factor.

6. The method according to any one of claims 1 to 5, wherein the quality factor is selected from a plurality of candidate quality factors based on the compression bit rate.

7. An image processing method, wherein the method comprises:
obtaining a compressed file, wherein the compressed file comprises a bitstream and a quality factor;
obtaining, based on the quality factor, first scaling information by using a first neural network;
decoding the bitstream to obtain a second feature map; and
performing image reconstruction on the second feature map by using a feature inverse transform network, to obtain an image, wherein the feature inverse transform network comprises a first feature inverse transform layer, and the first feature inverse transform layer is used to scale, based on the first scaling information, a feature value obtained by performing feature inverse transform on the second feature map, to obtain a first feature map.

8. The method according to claim 7, wherein the first scaling information comprises M scaling coefficients, the second feature map comprises M feature values, each scaling coefficient corresponds to one feature value, and the first feature inverse transform layer is used to scale each of the M feature values based on a corresponding scaling coefficient.

9. The method according to claim 7 or 8, wherein the method further comprises:
obtaining, based on the quality factor, second scaling information by using a second neural network, wherein the first scaling information is different from the second scaling information, and
the feature inverse transform network further comprises a second feature inverse transform layer, and the second feature inverse transform layer is used to scale, based on the second scaling information, a feature value obtained by performing feature inverse transform on a third feature map, to obtain a fourth feature map.

10. The method according to any one of claims 7 to 9, wherein the compressed file further comprises prior information, and the bitstream comprises a plurality of segments of sub-bitstreams; and decoding the bitstream to obtain the second feature map comprises:
obtaining statistical information of the bitstream based on the prior information, wherein the statistical information comprises a mean; and
based on missing of a target segment of bitstream in the plurality of segments of bitstreams, using a mean of the target segment of bitstream as a feature map of the target segment of bitstream in the second feature map.

11. An image processing apparatus, wherein the apparatus comprises:
an obtaining module, configured to obtain an image and a quality factor, wherein the quality factor is related to a compression bit rate of the image; and
a processing module, configured to: obtain, based on the quality factor, first scaling information by using a first neural network; perform feature extraction on the image by using a feature extraction network, to obtain a target feature map, wherein the feature extraction network comprises a first feature extraction layer, and the first feature extraction layer is used to scale, based on the first scaling information, a feature value obtained by performing feature extraction on a first feature map, to obtain a second feature map; and encode the target feature map to obtain a bitstream.

12. The apparatus according to claim 11, wherein the first scaling information comprises M scaling coefficients, the first feature map comprises M feature values, each scaling coefficient corresponds to one feature value, and the first feature extraction layer is used to scale each of the M feature values based on a corresponding scaling coefficient.

13. The apparatus according to claim 11 or 12, wherein the processing module is further configured to:
obtain, based on the quality factor, second scaling information by using a second neural network, wherein the first scaling information is different from the second scaling information, and
the feature extraction network further comprises a second feature extraction layer, and the second feature extraction layer is used to scale, based on the second scaling information, a feature value obtained by performing feature extraction on a third feature map, to obtain a fourth feature map.

14. The apparatus according to any one of claims 11 to 13, wherein the scaling is implemented through a product operation.

15. The apparatus according to any one of claims 11 to 14, the processing module is further configured to:
obtain a compressed file of the image based on the bitstream and the quality factor.

16. The apparatus according to any one of claims 11 to 15, wherein the quality factor is selected from a plurality of candidate quality factors based on the compression bit rate.

17. An image processing apparatus, wherein the apparatus comprises:
an obtaining module, configured to obtain a compressed file, wherein the compressed file comprises a bitstream and a quality factor; and
a processing module, configured to: obtain, based on the quality factor, first scaling information by using a first neural network; decode the bitstream to obtain a second feature map; and perform image reconstruction on the second feature map by using a feature inverse transform network, to obtain an image, wherein the feature inverse transform network comprises a first feature inverse transform layer, and the first feature inverse transform layer is used to scale, based on the first scaling information, a feature value obtained by performing feature inverse transform on the second feature map, to obtain a first feature map.

18. The apparatus according to claim 17, wherein the first scaling information comprises M scaling coefficients, the second feature map comprises M feature values, each scaling coefficient corresponds to one feature value, and the first feature inverse transform layer is used to scale each of the M feature values based on a corresponding scaling coefficient.

19. The apparatus according to claim 17 or 18, wherein the processing module is further configured to:
obtain, based on the quality factor, second scaling information by using a second neural network, wherein the first scaling information is different from the second scaling information, and
the feature inverse transform network further comprises a second feature inverse transform layer, and the second feature inverse transform layer is used to scale, based on the second scaling information, a feature value obtained by performing feature inverse transform on a third feature map, to obtain a fourth feature map.

20. The apparatus according to any one of claims 17 to 19, wherein the compressed file further comprises prior information, and the processing module is specifically configured to:
obtain statistical information of the bitstream based on the prior information, wherein the statistical information comprises a mean; and
based on missing of a target segment of bitstream in the plurality of segments of bitstreams, use a mean of the target segment of bitstream as a feature map of the target segment of bitstream in the second feature map.

21. A computer storage medium, wherein the computer storage medium stores one or more instructions, and when the instructions are executed by one or more computers, the one or more computers are enabled to perform operations of the method according to any one of claims 1 to 10.

22. A computer program product, comprising computer-readable instructions, wherein when the computer-readable instructions are run on a computer device, the computer device is enabled to perform the method according to any one of claims 1 to 10.

23. A system, comprising at least one processor and at least one memory, wherein the processor and the memory are connected and communicate with each other through a communication bus;
the at least one memory is configured to store code; and
the at least one processor is configured to execute the code to perform the method according to any one of claims 1 to 10.

24. A chip, comprising at least one processing unit and an interface circuit, wherein the interface circuit is configured to provide program instructions or data for the at least one processing unit, and the at least one processing unit is configured to execute the program instructions to implement the method according to any one of claims 1 to 10.
